## Europäisches Patentamt

## European Patent Office

## Office européen des brevets

(19)

(11) Veröffentlichungsnummer: **0 078 975 B1**

(12)

# EUROPÄISCHE PATENTSCHRIFT

(45) Veröffentlichungstag der Patentschrift: 27.12.85

(51) Int. Cl.⁴: **C 08 G 81/00, C 10 G 33/04**

(21) Anmeldenummer: 82109877.9

(22) Anmeldetag: 26.10.82

(54) Oberflächenaktive Verbindungen, Verfahren zu ihrer Herstellung und ihre Verwendung.

(30) Priorität: 29.10.81 DE 3142955

(43) Veröffentlichungstag der Anmeldung: 18.05.83 Patentblatt 83/20

(45) Bekanntmachung des Hinweises auf die Patenterteilung: 27.12.85 Patentblatt 85/52

(84) Benannte Vertragsstaaten: AT DE FR GB IT NL

(56) Entgegenhaltungen:
DE - A - 2 445 873
DE - A - 2 536 121
DE - C - 1 642 825
US - A - 2 499 368

Die Akte enthält technische Angaben, die nach dem Eingang der Anmeldung eingereicht wurden und die nicht in dieser Patentschrift enthalten sind.

(73) Patentinhaber: **HOECHST AKTIENGESELLSCHAFT, Postfach 80 03 20, D-6230 Frankfurt am Main 80 (DE)**

(72) Erfinder: **Billenstein, Siegfried, Dr., Samerbergweg 8, D-8261 Burgkirchen/Alz (DE)**
Erfinder: **Freundl, Hildegard, Watzmannring 9b, D-8261 Burgkirchen/Alz (DE)**
Erfinder: **Wimmer, Ignaz, Burgstrasse 26, D-8261 Unterau (DE)**
Erfinder: **Gohlke, Fritz Joachim, Dr., Hochstaufenstrasse 9, D-8261 Burgkirchen/Alz (DE)**
Erfinder: **Macenka, Johannes, Kastenstrasse 8, D-8261 Burgkirchen/Alz (DE)**

BUNDESDRUCKEREI BERLIN

**Beschreibung**

Die Erfindung betrifft neue grenzflächenaktive Verbindungen. Die Erfindung betrifft ferner ein Verfahren zur Herstellung der neuen Verbindungen und ihre Verwendung zum Trennen von wäßrigen Emulsionen organischer Flüssigkeiten, insbesondere zum Trennen von Erdölemulsionen des Wasser-in-Öl Typs.

Aus der Vielzahl der als Erdölemulsionsspalter beschriebenen Substanzen haben vor allem die folgenden Verbindungen in die Praxis Eingang gefunden:

1.  Blockpolymerisate aus Propylenoxid und Ethylenoxid, wie sie durch Anlagerung von Ethylenoxid an Polypropylenglykole erhalten werden (US-PS 2 674 619 und DE-AS 1 018 179),

2.  Alkylphenolharze, die in organischen Lösungsmitteln löslich sind und deren freie Hydroxylgruppen nachträglich mit Ethylenoxid und/oder Propylenoxid umgesetzt werden (US-PS 2 499 368, 2 499 370, 2 524 889, 2 560 333 und 2 574 543),

3.  Umsetzungsprodukte von a) Addukten aus Gemischen von Polyethylenglykolen und hydrophoben Polyalkylenglykolen mit Diisocyanaten oder Additionsprodukten von Ethylenoxid an wasserunlösliche Polyalkylenglykole und b) Kondensationsprodukten bifunktioneller Monoalkylphenole, die ortho- und para-ständige, gerade oder verzweigte Alkylgruppen mit 1 bis 24 Kohlenstoffatomen besitzen, mit Aldehyden im Molverhältnis 0,5 : 2, vorzugsweise 0,9 bis 1,1, deren freie Hydroxylgruppen mit Epoxiden weiter umgesetzt wurden, wobei 2 bis 20 mol Epoxid auf 1 OH-Äquivalent des Harzes zur Anwendung gelangen, mit c) Diisocyanaten (DE-PS 1 642 825) und

4.  veretherte Phenol-Aldehydkondensationsprodukte, die dadurch erhalten werden, daß man a) ein Anlagerungsprodukt, das durch Umsetzung von aliphatischen Aldehyden mit Phenol im molaren Verhältnis von 1 : 1 bis 3 : 1 bei Temperaturen von 50 bis 80°C in Gegenwart eines alkalischen Katalysators erhalten worden ist, mit b) einem Blockpolymerisat, das durch Umsetzung von Polypropylenglykolen mit Molgewichten von 1500 bis 2500 mit 30 bis 50 Gew.-% Ethylenoxid in Gegenwart alkalischer Katalysatoren hergestellt worden ist, im Verhältnis von 0,5 bis 4 mol von a) mit 1 mol b) nach vorheriger Neutralisation bei 80 bis 150°C kondensiert und das sich bildende Reaktionswasser entfernt (DE-PS 2 445 873).

Die obengenannten Verbindungen lassen hinsichtlich grenzflächenaktiver Eigenschaften, insbesondere bei ihrer Verwendung als Erdölspalter, zu wünschen übrig. Sie erfüllen die derzeitigen Forderungen jeweils nur zum Teil. Entweder ist bei spontaner Anfangsspaltung die Gesamtabscheidung zu schlecht und der Salzaustrag mäßig oder der Spaltvorgang verläuft bei zwar guter Salz- und Wasserabscheidung zu langsam. Mitunter ist auch ihre Verwendung spezifisch an wenige Ölsorten gebunden, oder es werden relativ große Einsatzmengen benötigt, oder sie sind nur bei erhöhter Temperatur wirksam.

In der deutschen Offenlegungsschrift 2 536 121 sind andererseits Polyformal- und Polycarbonatcopolymere beschrieben, die durch Umsetzung von Alkylenoxidpolymeren oder Alkylenoxidcopolymeren mit Formaldehyd oder Dialkylcarbonat erhalten werden. Als Verwendungsmöglichkeiten für diese Tenside werden der Einsatz als Schaumunterdrückungsmittel, als Benetzungsmittel bei der Papierherstellung und als Gleitmittel in der Textilindustrie genannt. Die Möglichkeit einer Verwendung als Emulsionsspalter wird nicht genannt und auch nicht angedeutet.

Die Aufgabe der vorliegenden Erfindung besteht nun darin, neue grenzflächenaktive Verbindungen, insbesondere Erdölemulsionsspalter, bereitzustellen, welche die obengenannten Mängel nicht aufweisen und sich besonders dadurch auszeichnen, daß auch bei einer niedrigen Erdölaufbereitungstemperatur nur geringe Mengen für eine hohe Wirksamkeit erforderlich sind.

Es wurde überraschenderweise gefunden, daß man durch Reaktion von a) Blockpolymerisaten aus Propylenoxid und Ethylenoxid und b) oxalkylierten Alkylphenol-Aldehydharzen mit c) Formaldehyd neue grenzflächenaktive Verbindungen erhält, die sich insbesondere zum Spalten von Erdölemulsionen vom Typ Wasser-in-Öl eignen.

Die erfindungsgemäßen neuen Verbindungen sind dadurch gekennzeichnet, daß sie hergestellt worden sind, indem man

a)  ein Blockpolymerisat aus Propylenoxid und Ethylenoxid mit einem durchschnittlichen Molekulargewicht von 1650 bis 7000 und mit 10 bis 50 Gew.-% Ethylenoxid-Einheiten und 50 bis 90 Gew.-% Propylenoxid-Einheiten, bezogen auf das Blockpolymerisat, und

b)  ein oxalkyliertes Alkylphenol-Aldehydharz, das durch Umsetzen von Para- und/oder Ortho-Alkylphenolen mit 1 bis 18 C-Atomen in der Alkylgruppe mit einem aliphatischen Aldehyd mit 1 bis 4 C-Atomen im Molverhältnis von 1 : 0,5 bis 2 und Ethoxylierung und/oder Propoxylierung des Umsetzungsproduktes mit 1 bis 40 mol Epoxid pro phenolische Hydroxylgruppe bereitet worden ist, mit

c)  Formaldehyd umsetzt, wobei die Komponente a) in einer Menge von 1 bis 100 Gew.-Teilen, bezogen auf einen Gewichtsteil von der Komponente b), und der Formaldehyd in einer 0,5- bis 2fachen stöchiometrischen Menge, bezogen auf die Menge an Hydroxylgruppen in a) und b),

**0 078 975**

eingesetzt wird und die Umsetzung in Gegenwart von sauren Katalysatoren bei einer Temperatur von 50 bis 180° C durchgeführt wird.

Die bei der vorliegenden Erfindung zu verwendenden Verbindungen a) und b) sowie ihre Herstellung sind bekannt, beispielsweise aus den eingangs genannten Druckschriften.

Die erfindungsgemäß zu verwendenden Ethylenoxid-Propylenoxid-Blockpolymerisate besitzen ein durchschnittliches Molekulargewicht von vorzugsweise 1900 bis 3800 und einen Gehalt an Ethylenoxid von vorzugsweise 10 bis 30 Gew.-% und an Propylenoxid von vorzugsweise 70 bis 90 Gew.-%, Gewichtsprozente jeweils bezogen auf das Blockpolymere.

Die Verbindung a) wird vorzugsweise dadurch hergestellt, daß von einem Polypropylenglykol mit einem durchschnittlichen Molekulargewicht von etwa 1500 bis 3500, vorzugsweise von etwa 1700 bis 2500, ausgegangen wird, an das man in Gegenwart von alkalischen Katalysatoren, vorzugsweise Kaliumhydroxid, Natriumhydroxid und/oder Natriummethylat, Ethylenoxid anlagert, bis das gewünschte Ethylenoxid-Propylenoxid-Blockpolymerisat vorliegt, wobei nach Beendigung der Adduktbildung der Katalysator im Produkt verbleibt, neutralisiert oder durch Filtration oder Ionenaustausch abgetrennt wird. Bei dieser Arbeitsweise setzt man also die genannten Polypropylenglykole mit so viel Ethylenoxid um, daß 10 bis 50 Gew.-%, vorzugsweise 10 bis 30 Gew.-%, Ethylenoxid im fertigen Blockpolymerisat enthalten sind (der Propylenoxidgehalt beträgt 50 bis 90 Gew.-%, vorzugsweise 70 bis 90 Gew.-%.).

Zur Herstellung der Komponente b), dem Alkylphenol-Aldehydharzoxalkylat, werden ein bifunktionelles Para- oder Ortho-Alkylphenol mit 1 bis 18 C-Atomen je Alkylgruppe, vorzugsweise mit 4 bis 12 C-Atomen je Alkylgruppe, oder Gemische hiervon und ein aliphatischer Aldehyd mit 1 bis 4 C-Atomen, vorzugsweise Formaldehyd, in einer Menge von 1 mol Alkylphenolverbindung und 0,5 bis 2 mol Aldehyd, vorzugsweise 0,8 bis 1,3 mol Aldehyd, eingesetzt.

Geeignete Alkylphenole sind beispielsweise Ortho- oder Para-Kresol, Ortho- oder Para-sekundäres Butylphenol, -tertiäres Butylphenol, -Amylphenol, -Octylphenol, -Nonylphenol und Ortho- oder Para-Dodecylphenol.

Die erfindungsgemäß einzusetzenden Alkylphenole können geringe Mengen, zweckmäßigerweise bis zu etwa 10 Gew.-%, Dialkylphenole enthalten.

Die Umsetzung von Alkylphenol und Aldehyd erfolgt zweckmäßigerweise dadurch, daß die beiden Komponenten in Gegenwart von alkalischen Katalysatoren, beispielsweise Alkalihydroxiden oder Alkylaminen, oder von sauren Katalysatoren, beispielsweise anorganischen oder organischen Säuren, wie Salzsäure, Schwefelsäure, Phosphorsäuren, Sulfonsäuren, Sulfamidosäuren oder Halogenessigsäuren, und in Gegenwart von einem mit Wasser ein Azeotrop bildenden organischen Lösungsmittel, beispielsweise Toluol, Xylol, höheren Aromaten oder Gemischen hiervon auf eine Temperatur von 90 bis 180° C, vorzugsweise 100 bis 160° C, erhitzt werden, wobei das entstehende Reaktionswasser während der Umsetzung durch azeotrope Destillation entfernt wird. Die Umsetzung in saurer Katalyse ist bevorzugt. An das Alkylphenol-Aldehydharz wird anschließend Ethylenoxid, Propylenoxid oder Ethylenoxid und Propylenoxid angelagert. Dazu wird das Alkylphenol-Aldehydharz, gegebenenfalls unter Verwendung eines organischen Lösungsmittels wie Benzol, Toluol, Xylol oder Benzin mit den entsprechenden Mengen von den genannten Epoxiden zweckmäßigerweise in einem Autoklaven bei einer Temperatur von 100 bis 180° C, vorzugsweise von 120 bis 160° C, umgesetzt. Die Ethoxylierung und/oder Propoxylierung erfolgt vorzugsweise in einem alkalischen Milieu. Dazu wird das Alklyphenol-Aldehydharz, wenn es in Gegenwart von sauren Katalysatoren hergestellt worden ist, vorher zunächst neutralisiert und mit einer katalytischen Menge an alkalischen Katalysatoren versetzt. Es kann zweckmäßig sein, auch dem mit alkalischer Katalyse hergestellten Alkylphenol-Aldehydharz noch zusätzlich Alkalikatalysatoren zuzumischen, um bei der anschließenden Epoxidierung alkalische Katalyse zu gewährleisten. Die Umsetzung des Alkylphenol-Aldehydharzes mit Ethylenoxid und/oder Propylenoxid kann an der Abnahme des anfänglich herrschenden Druckes oder am Verbrauch an Epoxid verfolgt werden.

Das so erhaltene epoxidierte, gegebenenfalls neutralisierte Alkylphenol-Aldehydharz stellt die erfindungsgemäß zu verwendende Verbindung b) dar. Sie enthält 1 bis 40 mol Epoxid, vorzugsweise 2 bis 20 mol Epoxid, pro phenolische Hydroxyl-Gruppe, das heißt pro Hydroxyl-Äquivalent des Alkylphenol-Aldehydharzes.

Die Herstellung der erfindungsgemäßen Verbindungen erfolgt dadurch, daß 1 bis 100 Gew.-Teile, vorzugsweise 10 bis 40 Gew.-Teile der Komponente a) und 1 Gew.-Teil der Komponente b) mit c) Formaldehyd in einer 0,5- bis 2fachen, vorzugsweise 0,8- bis 1,5fachen stöchiometrischen Menge, bezogen auf die insgesamt vorhandenen Hydroxyl-Gruppen (bestimmt als Hydroxyl-Zahl), in Gegenwart von sauren Katalysatoren und bei einer Temperatur von 50 bis 180° C, vorzugsweise 80 bis 160° C, zur Reaktion gebracht werden.

Der Formaldehyd kann in Form von Paraformaldehyd oder in Form einer vorzugsweise 20 bis 40 gew.-%igen wäßrigen Lösung (Formalin) eingesetzt werden. Es können auch entsprechende Mengen an Trioxan verwendet werden. Die erfindungsgemäße Umsetzung wird vorzugsweise in der Weise durchgeführt, daß die Komponenten a), b), c) sowie der Katalysator allein (Umsetzung in Substanz) oder mit Lösungsmittel gemeinsam vorgelegt und unter Rühren auf die angegebene Temperatur

3

erhitzt werden, wobei das entstehende Reaktionswasser entfernt wird. Die Umsetzung wird so lange durchgeführt, bis kein oder nahezu kein Reaktionswasser mehr gebildet wird. Das ist im allgemeinen nach 3 bis 15 Stunden der Fall.

Es können anorganische oder organische saure Katalysatoren eingesetzt werden. Geeignete Katalysatoren sind beispielsweise Halogenwasserstoffsäuren wie Salzsäure und Bromwasserstoffsäure, Phosphorsäuren, Schwefelsäure, Sulfonsäuren wie p-Toluolsulfonsäure und Dodecylbenzolsulfonsäure, Halogenessigsäuren wie Trichloressigsäure und Trifluoressigsäure, Perfluorcarbonsäuren wie Perfluoroctansäure, Perfluorsulfonsäuren wie Perfluoroctansulfonsäure, und Mischungen hiervon. Bevorzugte saure Katalysatoren sind Schwefelsäure, Dodecylbenzolsulfonsäure und Para-Toluolsulfonsäure. Die Menge an sauren Katalysatoren beträgt in der Regel 0,05 bis 3 Gew.-%, vorzugsweise 0,1 bis 1,5 Gew.-%, bezogen auf das Gesamtgewicht der Reaktionsteilnehmer a), b) und c).

Das entstehende Reaktionswasser wird — gegebenenfalls nach einer Vorkondensation bei 80 bis 120° C über 1 bis 6 Stunden — zweckmäßigerweise unter Anwendung von Vakuum (Wasserstrahlvakuum) oder durch Schlepp- bzw. azeotrope Destillation mit Hilfe eines organischen Lösungsmittels entfernt. Als organische Lösungsmittel kommen beispielsweise Hexan, Cyclohexan, Toluol, Xylol, Tetralin, Dialkylformale mit 1 bis 4 C-Atomen in der Alkylgruppe, beispielsweise Demethylformal und Dibutylformal, oder Mischungen davon in Betracht. Bevorzugte Lösungsmittel sind Toluol, Xylol, Dialkylformale mit 1 bis 4 C-Atomen je Alkylgruppe oder Mischungen hiervon. Die Menge an Lösungsmittel kann ein weiten Grenzen variieren. Sie richtet sich nach der eingesetzten Menge an Verbindung a) und b).

Das erhaltene Reaktionsprodukt wird gegebenenfalls vom verwendeten Lösungsmittel befreit und mit einer dem verwendeten Säurekatalysator entsprechenden Menge Alkali, vorzugsweise mit Natriummethylat-Lösung, neutralisiert.

Bevorzugte erfindungsgemäße Verbindungen sind demnach solche, die hergestellt worden sind, indem man

a) ein Blockpolymerisat aus Propylenoxid und Ethylenoxid mit einem durchschnittlichen Molekulargewicht von 1900 bis 3800 und mit 10 bis 30 Gew.-% Ethylenoxid-Einheiten und 70 bis 90 Gew.-% Propylenoxid-Einheiten und

b) ein oxalkyliertes Alkylphenol-Aldehydharz, das durch Umsetzen von Para- und/oder Ortho-Alkylphenolen mit 4 bis 12 C-Atomen in der Alkylgruppe mit Formaldehyd im Molverhältnis von 1 : 0,8 bis 1,3 und Ethoxilierung und/oder Propoxilierung des Umsetzungsproduktes mit 2 bis 20 mol Epoxid pro phenolische Hydroxyl-Gruppe bereitet worden ist, mit

c) Formaldehyd umsetzt, wobei die Komponente a) in einer Menge von 10 bis 40 Gew.-Teilen, bezogen auf einen Gewichtsteil von der Komponente b), und der Formaldehyd in einer 0,8- bis 1,5fachen stöchiometrischen Menge, bezogen auf die Menge an Hydroxyl-Gruppen in a) und b), eingesetzt wird und die Umsetzung in Gegenwart von sauren Katalysatoren bei einer Temperatur von 80 bis 160° C durchgeführt wird.

Die erfindungsgemäßen Verbindungen stellen gelb bis braun gefärbte, mehr oder weniger viskose Flüssigkeiten dar, die in organischen Lösungsmitteln, beispielsweise in Xylol löslich sind.

Die neuen Verbindungen eignen sich besonders vorteilhaft zum Spalten von Erdölemulsionen des Wasser-in-Öl Typs, da sie vor allem eine hohe Wirksamkeit auch bei relativ niedrigen Aufbereitungstemperaturen besitzen.

In den Erdölaufbereitungsanlagen werden die Wasser-in-Öl-Emulsionen je nach Viskosität auf 40 bis 70° C erwärmt und unter Zugabe geeigneter Demulgatoren (Spalter) oder mit Hilfe einer kombinierten elektrisch-chemischen Arbeitsweise auf die Abnahmespezifikationen der Raffinerien gebracht. Wegen der bestehenden Forderung nach Energieeinsparung versucht man immer mehr, die derzeit üblichen Aufbereitungstemperaturen zu senken. Eine niedrige Aufbereitungstemperatur hat aber zur Folge, daß die bekannten Spaltertypen in einer relativ hohen Menge zudosiert werden müssen. Es ist nun eine Tatsache, daß die Wirksamkeit eines Demulgators in einer Emulsion an eine bestimmte Höchstmenge gebunden ist. Wenn diese Menge überschritten wird, das heißt, wenn zuviel an Demulgator angeboten wird, sinkt die Wirksamkeit (sogenanntes overtreatment), das heißt, es scheidet sich nur ein Teil oder gar keine Wasserphase mehr ab. Es hat sich herausgestellt, daß mit den bekannten Spaltertypen die Separierung des Lagerstättenwassers nicht schnell genug erfolgt und daher häufig ein noch zu großer Gehalt an Restwasser oder Restemulsion im Roherdöl (Topöl) vorliegt.

Die erfindungsgemäßen Verbindungen zeichnen sich nun insbesondere dadurch aus, daß sie auch bei niedrigen Aufbereitungstemperaturen nach kurzer Separationszeit abnahmespezifische Roherdöle liefern, und daß dazu nur eine relativ geringe Menge erforderlich ist. Für diesen Einsatz ist es zweckmäßig, die neuen Produkte mit Lösungsmitteln zu verdünnen. Als Lösungsmittel werden zweckmäßigerweise Alkohole wie Methanol, Isopropanol und Butanol, aromatische Kohlenwasserstoffe wie Toluol und Xylol oder handelsübliche Lösungsmittel wie Mischungen aus höheren Aromaten (Solventnaphtha) verwendet.

Die Einsatzmengen der erfindungsgemäßen Verbindungen als Erdölemulsionsspalter können in weiten Grenzen variieren. Sie hängen bekanntlich insbesondere von der Art der Roherdölemulsion und von der Aufbereitungstemperatur bzw. der Art der mechanisch/physikalischen Aufbereitungsanlage ab.

Bei der erfindungsgemäßen Verwendung der neuen Verbindungen zum Trennen von Erdölemulsionen vom Typ Wasser-in-Öl werden demnach die Verbindungen den Erdölemulsionen in einer jeweils wirksamen Menge zugesetzt. Diese Menge beträgt im allgemeinen 5 bis 100 ppm, vorzugsweise 10 bis 50 ppm.

Die Erfindung wird nun an Beispielen nach näher erläutert.

## Herstellung der erfindungsgemäßen Verbindungen

### Beispiel 1

### Blockpolymerisat (Komponente a)

Polypropylenglykol mit einem durchschnittlichen Molekulargewicht von 2000 wird in bekannter Weise in Gegenwart alkalischer Katalysatoren mit so viel Ethylenoxid umgesetzt, daß ein Addukt mit einem Ethylenoxidgehalt von 20 Gew.-% im Endprodukt (Hydroxyl-Zahl 46) erhalten wird.

### Alkylphenol-Aldehydharz (Komponente b)

p-Nonylphenol wird in bekannter Weise in Gegenwart katalytischer Mengen Dodecylbenzolsulfonsäure mit äquivalenter Menge Formalinlösung (35 gew.-%ig) zur Reaktion gebracht, das Reaktionsgemisch durch Auskreisen mit Xylol vom Wasser befreit und neutralisiert. Anschließend wird dieses Harz nach Zugabe katalytischer Mengen Alkali mit so viel Ethylenoxid zur Reaktion gebracht, daß auf ein Harz-Äquivalent, das heißt auf eine phenolische Hydroxyl-Gruppe, 5 mol Ethylenoxid zur Anwendung kommen. Eine 20 gew.-%ige xylolische Lösung weist eine Hydroxyl-Zahl von 24 auf und stellt die Komponente b) dar.

### Erfindungsgemäßes Produkt

280 g von der Komponente a), 79 g von der Komponente b) (entspricht einem Gewichtsverhältnis a : b als 100%ige Komponenten von 18 : 1) und 280 g Di-n-Butylformal werden in einem Rührkolben, der mit einem Auskreisaufsatz versehen ist, gemeinsam mit 11,1 g 35%iger wäßriger Formalinlösung vorgelegt (die 11,1 g entsprechen der stöchiometrischen Menge Formaldehyd, bezogen auf die vorhandenen Hydroxyl-Gruppen in a) und b)).

Unter Rühren werden 2,4 g konzentrierte Schwefelsäure (entspricht 0,6 Gew.-% Schwefelsäure, bezogen auf das Gewicht von a) plus b) plus c) zugegeben und die Reaktionstemperatur unter Auskreisen des Wassers langsam auf 160° C gesteigert. Nach insgesamt 6 Stunden Reaktionszeit kühlt man auf ca. 50° C ab und destilliert das Di-n-Butylformal im Wasserstrahlvakuum (das ist etwa 2000 Pa) unter erneuter Steigerung der Sumpftemperatur auf 160° C möglichst quantitativ ab.

Nach Abkühlen auf 100° C wird mit 10 g 30%iger Natriummethylatlösung neutralisiert. Man erhält ein braunes, viskoses, in organischen Lösungsmitteln (z. B. Xylol) lösliches Produkt.

### Beispiel 2

540 g von der Komponente a) gemäß Beispiel 1 und 30 g eines n-Nonylphenolformaldehydharzes, ethoxiliert mit 5 mol Ethylenoxid (analog Komponente b) in Beispiel 1) in Form einer 90 gew.-%igen Lösung in Xylol mit der Hydroxyl-Zahl 107 (Gewichtsverhältnis a : b = 20 : 1) werden gemeinsam mit 20 g 35%iger wäßriger Formalinlösung vermischt (die 20 g entsprechen der 1,1fachen stöchiometrischen Menge Formaldehyd, bezogen auf die vorhandenen Hydroxyl-Gruppen in a) und b)). Nach Zugabe von 3,3 g konzentrierter Schwefelsäure (entspricht 0,6 Gew.-% Schwefelsäure, bezogen auf das Gewicht von a) plus b) plus c) wird 3 Stunden bei 100° C gerührt, dann auf 140° C aufgeheizt und nach Erreichen dieser Temperatur Wasserstrahlvakuum angelegt. Nach Ablauf von 6 Stunden Kondensationszeit bei 140° C wird abgekühlt und wie in Beispiel 1 mit Na-Methylatlösung neutralisiert. Man erhält ein braunes, viskoses, in organischen Lösungsmitteln lösliches Produkt.

### Beispiel 3

150 g von der Komponente a) gemäß Beispiel 1, 8,5 g des p-Nonylphenolformaldehydharzes, ethoxiliert mit 5 mol Ethylenoxid (90 gew.-%ig in Xylol, Hydroxyl-Zahl 107) vom Beispiel 2 als Komponente b) und 75 g Dibutylformal werden in einem Rührkolben gemeinsam mit 3 g Paraformaldehyd (entspricht der 1,3fachen stöchiometrischen Menge Formaldehyd, bezogen auf die Hydroxyl-Gruppen in a) und b)) und 1,7 g (1,1 Gew.-%) p-Toluolsulfonsäure vorgelegt (Gewichtsverhältnis a : b = 19,6 : 1). Nach 6stündigem Rühren bei 100°C wird langsam auf 140°C aufgeheizt und nach Anlegen von Wasserstrahlvakuum das Di-n-butylformal und das Reaktionswasser abdestilliert. Nach insgesamt 10 Stunden Kondensationszeit bei 140°C und Wasserstrahlvakuum wird abgekühlt und wie in Beispiel 1 mit Natriummethylat-Lösung neutralisiert.

Das Reaktionsprodukt stellt ein braunes, viskoses, in organischen Lösungsmitteln lösliches Produkt dar.

## Beispiel 4

150 g von der Komponente a) gemäß Beispiel 1 und 8,5 Gew.-Teile des p-Nonylphenolformaldehydharzes, ethoxiliert mit 5 mol Ethylenoxid (90 gew.-%ig in Xylol, Hydroxyl-Zahl 107) vom Beispiel 2 als Komponente b) werden in einem Rührkolben gemeinsam mit 2,5 g Paraformaldehyd (entspricht der 1,1fachen stöchiometrischen Menge Formaldehyd, bezogen auf die Hydroxyl-Gruppen in a) und b)) vermischt (Gewichtsverhältnis a : b = 19,6 : 1). Nach Zugabe von 0,88 g (0,55 Gew.-%) konzentrierter Schwefelsäure wird langsam unter Rühren bis 140°C aufgeheizt und 1 Stunde bei dieser Temperatur weitergerührt. Nun wird Wasserstrahlvakuum angelegt und weitere 4 Stunden bei 140°C gehalten. Nach dieser Kondensationszeit wird abgekühlt und analog Beispiel 1 mit Natriummethylat-Lösung neutralisiert.

Man erhält ein dunkelbraunes, viskoses, in organischen Lösungsmitteln lösliches Produkt.

## Beispiel 5

150 g von der Komponente a) gemäß Beispiel 1 und 17 g des p-Nonylphenolformaldehydharzes, ethoxiliert mit 5 mol Ethylenoxid (90 gew.-%ig in Xylol, Hydroxyl-Zahl 107) von Beispiel 2 als Komponente b) (entspricht einem Gewichtsverhältnis a : b als 100%ige Komponenten von 9,8 : 1), werden in einem Rührkolben gemeinsam mit 7,2 g 35%iger wäßriger Formalinlösung (entspricht der 1,1fachen stöchiometrischen Menge Formaldehyd, bezogen auf die Hydroxyl-Gruppen in a) und b) vermischt. Nach Zugabe von 0,8 g (0,6 Gew.-%) konzentrierter Schwefelsäure wird 2 Stunden bei 100°C gerührt und danach auf 140°C aufgeheizt und 1 1/2 Stunden bei dieser Temperatur gehalten. Nun wird Wasserstrahlvakuum angelegt und weitere 6 Stunden bei 140°C gehalten. Nach Abkühlen und Neutralisieren mit Natriummethylat-Lösung erhält man ein tiefbraunes, viskoses, in organischen Lösungsmitteln lösliches Produkt.

## Beispiel 6

250 g von der Komponente a) gemäß Beispiel 1 und 9,8 g eines p-tert.-Butylphenolformaldehydharzes, ethoxiliert mit 2 mol Ethylenoxid (65%ig in Xylol, Hydroxyl-Zahl 156), das analog dem Harzoxethylat b) in Beispiel 1 aus p-tert.-Butylphenol hergestellt wird, als Komponente b), (entspricht einem Gewichtsverhältnis a : b als 100%ige Komponenten von 40 : 1) werden gemeinsam in einem Rührkolben mit 10,8 g 35%iger wäßriger Formalinlösung vermischt (die 10,8 g entsprechen der 1,1fachen stöchiometrischen Menge Formaldehyd, bezogen auf vorhandene Hydroxyl-Gruppen in a) plus b). Unter Rühren werden 1,5 g (0,6 Gew.-%) konzentrierte Schwefelsäure zugetropft und danach die Mischung 2 Stunden bei 100°C gehalten und anschließend 1 Stunde bei 140°C gehalten. Nach Anlegen von Wasserstrahlvakuum wird das Reaktionsgemisch weitere 3 Stunden bei 140°C gerührt.

Nach Abkühlen wird mit Natriummethylat-Lösung neutralisiert.

Das Reaktionsprodukt stellt ein rötlichbraunes, viskoses, in organischen Lösungsmitteln lösliches Produkt dar.

## Beispiel 7

150 g der Komponente a) gemäß Beispiel 1 und 8,4 g eines p-Nonylphenolformaldehydharzes, das mit 22,6 mol Propylenoxid und anschließend mit 10 mol Ethylenoxid umgesetzt worden ist (96%ig in Xylol, Hydroxyl-Zahl 53,8; hergestellt analog dem Harzoxethylat b) in Beispiel 1) als Komponente b) (entspricht einem Gewichtsverhältnis a : b als 100%ige Komponenten von 18,6 : 1) werden gemeinsam mit 6,2 g 35%iger wäßriger Formalinlösung in einem Rührkolben vermischt (die 6,2 g entsprechen der 1,1fachen stöchiometrischen Menge Formaldehyd, bezogen auf die Hydroxyl-Gruppen in a) plus b)). Nach Zugabe von 0,8 g (0,5 Gew.-%) konzentrierter Schwefelsäure wird 2 Stunden bei 100"C und anschließend 1 1/2 Stunden bei 140"C kondensiert. Danach wird Wasserstrahlvakuum angelegt und weitere 10 Stunden bei 140°C gehalten. Nach Neutralisation mit Na-Methylatlösung erhält man ein dunkles, viskoses, in organischen Lösungsmitteln lösliches Produkt.

### Beispiel 8

In einem Rührkolben mit Auskreisaufsatz werden vorgelegt:

Als Komponente a) 300 g eines Propylenoxid-Ethylenoxid-Blockpolymeren mit einem Polypropylenglykol-Kern vom durchschnittlichen Molekulargewicht 3200 und einem Ethylenoxid-Gehalt von 45% im Endprodukt, hergestellt analog Komponente a) im Beispiel 1, als Komponente b) 19 g eines Dodecylphenolformaldehydharzes, das mit 10 mol Propylenoxid und anschließend 2 mol Ethylenoxid umgesetzt worden ist (50 gew.-%ig in Xylol, Hydroxy-Zahl 28,6; hergestellt aus Dodecylphenol von der Firma Shamrock, analog dem Harzoxethylat b) im Beispiel 1); entspricht einem Gewichtsverhältnis a : b als 100%ige Komponenten von 32 : 1,

  250 g    Di-n-Butylformal und
  4,5 g    35%ige wäßrige Formalinlösung

(entspricht der 0,9fachen stöchiometrischen Menge Formaldehyd, bezogen auf die Hydroxyl-Gruppen in a) plus b).

Zu dieser Mischung werden unter Rühren 2,2 g (0,7 Gew.-%) konzentrierte Schwefelsäure zugegeben, worauf langsam auf 160° C erhitzt wird. Nach 6stündigem Auskreisen des Reaktionswassers wird nach Abkühlen Wasserstrahlvakuum angelegt und das Di-n-Butylformal unter erneuter Steigerung der Sumpftemperatur auf 160° C möglichst quantitativ abdestilliert. Nach Neutralisation mit Natriummethylat-Lösung erhält man ein hellbraunes, viskoses, in organischen Lösungsmitteln lösliches Produkt.

### Beispiel 9

Polypropylenglykol mit einem durchschnittlichen Molekulargewicht von 1700 wird in bekannter Weise in Gegenwart alkalischer Katalysatoren mit so viel Ethylenoxid umgesetzt, daß ein Addukt mit einem Ethylenoxid-Gehalt von 27 Gew.-% im Endprodukt erhalten wird. Dieses Produkt hat die Hydroxyl-Zahl 49 und stellt die Komponente a) dar. 230 g p-Nonylphenol werden in Gegenwart katalytischer Mengen Natriumhydroxid mit 43 g Paraformaldehyd 91%ig, (das ist die 1,3fache stöchiometrische Menge) zur Reaktion gebracht. Die Zugabe des Paraformaldehyds erfolgt portionsweise. Am Ende wird entstehendes Reaktionswasser durch Auskreisen mit Xylol entfernt, wobei bis auf maximal 160° C erhitzt wird.

Das resultierende Harz wird ohne weitere Alkalisierung in bekannter Weise mit so viel Ethylenoxid und Propylenoxid umgesetzt, daß hintereinander

  6,7 mol Ethylenoxid und
  6,0 mol Propylenoxid

pro phenolische Hydroxyl-Gruppe zur Reaktion kommen. Die entstehende 90%ige xylolische Lösung des Harz-Ethylenoxid/Propylenoxid-Blockpolymeren hat eine Hydroxyl-Zahl von 66,4 und stellt die Komponente b) dar.

  150 g    von der Komponente a) und
  8,5 g    von der Komponente b)

(entspricht einem Gewichtsverhältnis der 100%igen Komponenten a : b = 20 : 1) werden gemeinsam mit 6,5 g 35%iger wäßriger Formalinlösung vermischt (die 6,5 g entsprechen der 1,07fachen stöchiometrischen Menge, bezogen auf die vorhandenen Hydroxyl-Gruppen). Nach Zugabe von 0,9 g (0,6 Gew.-%) konzentrierter Schwefelsäure wird 2 Stunden lang bei 100° C gerührt, dann auf 140° C aufgeheizt und Wasserstrahlvakuum angelegt. Nach Ablauf von 6 Stunden Kondensationszeit bei 140° C unter Vakuum wird abgekühlt und mit Natriummethylat-Lösung neutralisiert. Das erhaltene Produkt ist eine braune, viskose, in Xylol lösliche Flüssigkeit.

### Beispiel 10

150 g von der Komponente a) des Beispiels 9 werden mit 8,5 g von dem p-Nonylphenolformaldehydharzoxethylat des Beispiels 1 als Komponente b) (a : b = 20 : 1) und 6,4 g 35%iger wäßriger Formalinlösung vermischt (die 6,4 g entsprechen der stöchiometrischen Menge Formaldehyd bezogen auf die vorhandenen Hydroxyl-Gruppen). Nach Zugabe von 0,36 g (0,2 Gew.-%) konzentrierter Schwefelsäure wird 1 Stunde bei 100° C gerührt, anschließend 1 Stunde bei 140° C gehalten. Nach Anlegen von Wasserstrahlvakuum wird das Reaktionsgemisch weitere 3 Stunden bei 140° C gerührt. Nach Abkühlen wird mit Natriummethylat-Lösung neutralisiert. Das Endprodukt stellt eine tiefbraune, viskose, in Xylol und ähnlichen organischen Lösungsmitteln lösliche Flüssigkeit dar.

## Beispiel 11

150 g eines Propylenoxid-Ethylenoxid-Blockpolymeren mit einem Polypropylenglykol-Kern vom durchschnittlichen Molekulargewicht 3200 und einem Ethylenoxid-Gehalt von 20 Gew.-% im Endprodukt (Hydroxyl-Zahl 32, hergestellt analog Komponente a) in Beispiel 1) werden in einem Rührkolben mit 8,5 g des ethoxilierten p-Nonylphenolformaldehydharzes vom Beispiel 2, in Form einer 90 gew.-%igen Lösung in Xylol mit der Hydroxyl-Zahl 107 (Komponente b) vermischt (a : b = 20 : 1).

Nach Zugabe von 4,4 g 35%iger wäßriger Formalinlösung (entspricht der stöchiometrischen Menge Formaldehyd, bezogen auf die Hydroxyl-Gruppen in a) und b) und 0,36 g (0,2 Gew.-%) konzentrierter Schwefelsäure wird 1 Stunde bei 100° C gerührt, danach auf 140° C aufgeheizt und 1 Stunde gehalten. Nach Anlegen von Wasserstrahlvakuum wird das Reaktionsgemisch weitere 3 Stunden bei 140° C gerührt. Nach Abkühlen und Neutralisation wird ein dunkelbraunes, viskoses Produkt erhalten, welches in vielen organischen Lösungsmitteln löslich ist.

Aus Zweckmäßigkeitsgründen wird nachstehend die an sich bekannte Berechnung der Menge an Formaldehyd, die erfindungsgemäß einzusetzen ist, näher erläutert und am Beispiel 1 gezeigt.

Mit Hilfe der Hydroxyl-Zahl der eingesetzten Komponenten a) und b) erhält man aus der Gleichung

$$\frac{\text{(g) Komponente a) mal Hydroxyl-Zahl} + \text{(g) Komponente b) mal Hydroxyl-Zahl}}{56\ 100\ (=\text{Molekulargewicht von KOH mal 1000})} = x$$

im Wert x die Menge an Hydroxyl-Gruppen, die durch die Komponenten a) und b) zugegen sind.

Die für x stöchiometrisch erforderliche Formaldehyd-Menge beträgt $\frac{x}{2}$ mol Formaldehyd, da bekanntlich 1 mol Formaldehyd mit 2 Hydroxyl-Gruppen reagiert, also für 1 Hydroxyl-Gruppe 0,5 mol (15 g) Formaldehyd erforderlich sind.

Auf Beispiel 1 angewandt ergibt sich:

$$\frac{280 \cdot 46 + 79 \cdot 24}{56\ 100} = 0,26$$

$$\frac{0,26}{2} = 0,13 \text{ mol HCHO} = 0,13 \cdot 30 \text{ g} = 3,9 \text{ g HCHO}.$$

Da der Formaldehyd (HCHO) in Form einer 35 gew.-%igen wäßrigen Lösung eingesetzt wird, sind

$$\frac{3,9}{35} \cdot 100 \text{ g} = 11,1 \text{ g}$$

von dieser Lösung erforderlich (vgl. Beispiel 1).

## Verwendung der erfindungsgemäßen Verbindungen als Erdölspalter

Die folgenden Beispiele mit mehreren verschiedenen Rohölemulsionen zeigen, daß die neuen Erdölspalter, verglichen mit denen gemäß Stand der Technik in einer von der Roherdölart unabhängigen und jeweils relativ geringen Menge auch bei einer niedrigen Aufbereitungstemperatur eine unerwartet hohe Wirksamkeit besitzen.

Beispiel 12

Rohöl aus dem Voralpengebiet

Wassergehalt: 50,50%
Salinität: 0,49%

| Spaltertyp | Einsatz- menge ppm | Wasserseparation in % nach | | | | | | % Rest- wasser im Topöl |
|---|---|---|---|---|---|---|---|---|
| | | 5′ | 15′ | 30′ | 1 h | 3 h | 6 h | |
| **Spalttemperatur: 50° C** | | | | | | | | |
| 1) Blockpolymerisat nach US-PS 2 674 619 | 50 | 0 | 0 | 6 | 64 | 78 | 78 | 0,8 |
| 2) Harzspalter nach US-PS 2 499 368 | 50 | 32 | 76 | 78 | 78 | 80 | 85 | 0,6 |
| 3) Verbindung v. Beispiel 1 vorliegender Anmeldung | 50 | 40 | 98 | 100 | 100 | 100 | 100 | 0,1 |
| Blindwert | — | 0 | 0 | 0 | 0 | 2 | 4 | — |
| 1) | 20 | 0 | 0 | 1 | 6 | 34 | 40 | 19,6 |
| 2) | 20 | 0 | 6 | 16 | 36 | 38 | 40 | 18,2 |
| 3) | 20 | 10 | 76 | 92 | 94 | 94 | 96 | 0,3 |
| Blindwert | — | 0 | 0 | 0 | 0 | 1 | 3 | — |
| 1) | 10 | 0 | 0 | 0 | 4 | 16 | 20 | > 30 |
| 2) | 10 | 0 | 1 | 8 | 18 | 20 | 22 | > 30 |
| 3) | 10 | 0 | 1 | 10 | 34 | 80 | 96 | 0,5 |
| Blindwert | — | 0 | 0 | 0 | 0 | 0 | 3 | — |
| **Spalttemperatur: 30° C** | | | | | | | | |
| 1) | 50 | 0 | 0 | 0 | 0 | 8 | 20 | 27,7 |
| 2) | 50 | 20 | 40 | 62 | 76 | 78 | 80 | 1,6 |
| 3) | 50 | 4 | 16 | 36 | 80 | 90 | 96 | 0,4 |
| Blindwert | — | 0 | 0 | 0 | 0 | 0 | 0 | — |
| 1) | 30 | 0 | 0 | 0 | 0 | 4 | 12 | > 30 |
| 2) | 30 | 1 | 6 | 22 | 60 | 62 | 64 | 12,8 |
| 3) | 30 | 0 | 6 | 20 | 56 | 84 | 92 | 0,6 |
| Blindwert | — | 0 | 0 | 0 | 0 | 0 | 0 | — |

## Beispiel 13

Rohölemulsion aus dem süddeutschen Raum

Wassergehalt: 51,50%
Salinität: 0,76%

| Spaltertyp | Einsatz-menge ppm | Wasserseparation in % nach | | | | | | % Rest-wasser im Topöl |
|---|---|---|---|---|---|---|---|---|
| | | 5' | 15' | 30' | 1 h | 3 h | 6 h | |
| **Spalttemperatur: 50° C** | | | | | | | | |
| 1) Harzspalter vernetzt nach DE-PS 1 642 825 | 30 | 0 | 52 | 64 | 68 | 82 | 88 | 2,8 |
| 2) Vernetzter Spalter nach DE-PS 2 445 873 | 30 | 0 | 50 | 66 | 70 | 84 | 90 | 0,8 |
| 3) Verbindung v. Beispiel 2 vorliegender Anmeldung | 30 | 0 | 52 | 64 | 72 | 84 | 90 | 0,6 |
| Blindwert | — | 0 | 0 | 0 | 2 | 2 | 4 | — |
| 1) | 15 | 0 | 1 | 4 | 14 | 40 | 56 | 12,5 |
| 2) | 15 | 0 | 18 | 66 | 72 | 88 | 90 | 0,9 |
| 3) | 15 | 0 | 20 | 64 | 74 | 90 | 94 | 0,7 |
| Blindwert | — | 0 | 0 | 0 | 2 | 3 | 3 | — |
| **Spalttemperatur: 30° C** | | | | | | | | |
| 1) | 100 | 0 | 0 | 1 | 8 | 36 | 82 | 4,5 |
| 2) | 100 | 0 | 0 | 2 | 14 | 60 | 88 | 0,6 |
| 3) | 100 | 0 | 0 | 1 | 12 | 64 | 96 | 0,5 |
| Blindwert | — | 0 | 0 | 0 | 0 | 0 | 0 | — |
| 1) | 50 | 0 | 0 | 0 | 4 | 20 | 36 | > 30 |
| 2) | 50 | 0 | 0 | 1 | 8 | 32 | 54 | 11 |
| 3) | 50 | 0 | 1 | 6 | 14 | 60 | 94 | 0,4 |
| Blindwert | — | 0 | 0 | 0 | 0 | 0 | 0 | — |

Beispiel 14

Rohölemulsion aus Niedersachsen

Wassergehalt: 42%
Salinität: 10,5%

| Spaltertyp | Einsatz-menge ppm | Wasserseparation in % nach | | | | | | % Rest-wasser |
|---|---|---|---|---|---|---|---|---|
| | | 5′ | 15′ | 30′ | 1 h | 3 h | 6 h | |
| **Spalttemperatur: 60° C** | | | | | | | | |
| 1) Blockpolymerisat nach US-PS 2 674 619 | 30 | 0 | 0 | 2 | 9 | 20 | 33 | > 30 |
| 2) Harzspalter nach US-PS 2 499 368 | 30 | 0 | 0 | 0 | 1 | 10 | 14 | > 30 |
| 3) Verbindung v. Beispiel 3 vorliegender Anmeldung | 30 | 3 | 41 | 82 | 85 | 88 | 90 | 0,8 |
| Blindwert | — | 0 | 0 | 0 | 0 | 0 | 2 | — |
| 1) | 15 | 0 | 0 | 0 | 0 | 0 | 0 | > 30 |
| 2) | 15 | 0 | 0 | 0 | 0 | 0 | 0 | > 30 |
| 3) | 15 | 0 | 7 | 44 | 65 | 75 | 84 | 1,8 |
| Blindwert | — | 0 | 0 | 0 | 0 | 0 | 4 | — |
| **Spalttemperatur: 30° C** | | | | | | | | |
| 1) | 100 | 0 | 4 | 10 | 22 | 30 | 38 | > 30 |
| 2) | 100 | 2 | 12 | 48 | 62 | 80 | 92 | 0,6 |
| 3) | 100 | 2 | 14 | 50 | 66 | 82 | 94 | 0,5 |
| Blindwert | — | 0 | 0 | 0 | 0 | 0 | 0 | — |
| 1) | 50 | 0 | 0 | 0 | 0 | 0 | 0 | > 30 |
| 2) | 50 | 0 | 8 | 20 | 28 | 36 | 40 | 17,8 |
| 3) | 50 | 0 | 12 | 52 | 64 | 84 | 92 | 0,6 |
| Blindwert | — | 0 | 0 | 0 | 0 | 0 | 0 | — |

## Beispiel 15

Rohöltestemulsion, das ist ein Rohöl aus dem Voralpengebiet, das auf einen Wassergehalt von 50% und eine Salinität von 0,25% eingestellt worden ist.

| Spaltertyp | Einsatz-menge ppm | Wasserseparation in % nach | | | | | | | | |
|---|---|---|---|---|---|---|---|---|---|---|
| | | 5′ | 10′ | 15′ | 20′ | 30′ | 45′ | 60′ | 90′ | 120′ |
| **Spalttemperatur: 50° C** | | | | | | | | | | |
| 1) Mischung aus 150 Gew.-Teilen des Blockpolymeris. a) mit 8,5 Gew.-Teilen d. Harzoxethylates v. Beisp. 4 also der Einsatzprodukte v. Beispiel 4 ohne Formalisierungsreaktion | 10 | 0 | 1 | 1 | 2 | 10 | 16 | 22 | 30 | 44 |
| 2) Verbindung v. Beispiel 4 vorliegender Anmeldung | 10 | 8 | 40 | 68 | 76 | 80 | 86 | 88 | 88 | 90 |
| Blindwert | — | 0 | 0 | 0 | 0 | 0 | 0 | 0 | 0 | 0 |
| **Rohöltestemulsion wie oben** | | | | | | | | | | |
| Wassergehalt: 50%  Salinität: 10% | | | | | | | | | | |
| **Spalttemperatur: 25° C** | | | | | | | | | | |
| 1) | 20 | 0 | 0 | 0 | 0 | 0 | 0 | 0 | 0 | 0 |
| 2) | 20 | 0 | 3 | 5 | 9 | 17 | 29 | 46 | 63 | 80 |
| Blindwert | — | 0 | 0 | 0 | 0 | 0 | 0 | 0 | 0 | 0 |

**0 078 975**

Beispiel 16

Rohölemulsion aus Saudi-Arabien

Wassergehalt: 17,5%
Salinität: 12,2%

| Spaltertyp | Einsatz-menge ppm | Wasserseparation in % nach | | | | | | % Rest-wasser im Topöl |
|---|---|---|---|---|---|---|---|---|
| | | 5′ | 15′ | 30′ | 1 h | 3 h | 6 h | |
| Spalttemperatur: 70°C | | | | | | | | |
| 1) Harzspalter vernetzt nach DE-PS 1 642 825 | 50 | 6 | 14 | 28 | 54 | 75 | 86 | 3,8 |
| 2) Vernetzter Spalter nach DE-PS 2 445 873 | 50 | 10 | 36 | 66 | 84 | 94 | 98 | 0,4 |
| 3) Verbindung v. Beispiel 5 vorliegender Anmeldung | 50 | 12 | 34 | 65 | 84 | 96 | 100 | 0,2 |
| 4) Verbindung v. Beispiel 7 vorliegender Anmeldung | 50 | 8 | 20 | 55 | 88 | 94 | 98 | 0,4 |
| Blindwert | — | 0 | 0 | 2 | 2 | 4 | 6 | — |
| 1) | 30 | 2 | 10 | 18 | 34 | 36 | 36 | > 30 |
| 2) | 30 | 8 | 25 | 52 | 68 | 74 | 80 | 4,0 |
| 3) | 30 | 10 | 32 | 64 | 80 | 92 | 96 | 0,6 |
| 4) | 30 | 8 | 24 | 56 | 88 | 92 | 98 | 0,4 |
| Blindwert | — | 0 | 0 | 0 | 3 | 4 | 4 | — |

**0 078 975**

Beispiel 17

Rohölemulsion aus der UdSSR, Typ Raevska

Wassergehalt: 66%
Salinität: 18%

| Spaltertyp | Einsatzmenge ppm | Wasserseparation in % nach | | | | | | % Restwasser im Topöl |
|---|---|---|---|---|---|---|---|---|
| | | 5′ | 15′ | 30′ | 1 h | 3 h | 6 h | |
| **Spalttemperatur: 40° C** | | | | | | | | |
| 1) Blockpolymerisat nach US-PS 2 674 619 | 80 | 0 | 28 | 42 | 60 | 88 | 92 | 0,4 |
| 2) Harzspalter vernetzt nach DE-PS 1 642 825 | 80 | 8 | 40 | 52 | 64 | 90 | 98 | 0,1 |
| 3) Verbindung vom Beispiel 6 vorliegender Anmeldung | 80 | 10 | 36 | 48 | 62 | 88 | 96 | 0,4 |
| 4) Verbindung vom Beispiel 8 vorliegender Anmeldung | 80 | 6 | 30 | 54 | 73 | 92 | 98 | 0,2 |
| Blindwert | — | 0 | 0 | 2 | 2 | 4 | 6 | — |
| 1) | 40 | 0 | 0 | 7 | 14 | 30 | 45 | > 30 |
| 2) | 40 | 2 | 12 | 16 | 20 | 46 | 64 | 13 |
| 3) | 40 | 8 | 36 | 44 | 60 | 88 | 92 | 0,6 |
| 4) | 40 | 4 | 34 | 52 | 74 | 94 | 98 | 0,2 |
| Blindwert | — | 0 | 0 | 0 | 1 | 3 | 4 | — |

Beispiel 18

Rohöltestemulsion, das ist ein Rohöl aus dem Voralpengebiet, das auf einen Wassergehalt von 50% und eine Salinität von 0,50% eingestellt worden ist.

| Spaltertyp | Einsatzmenge ppm | Wasserseparation in % nach | | | | |
|---|---|---|---|---|---|---|
| | | 5′ | 15′ | 30′ | 60′ | 120′ |
| **Spalttemperatur: 50° C** | | | | | | |
| Blockpolymerisat vom Beispiel 9 vorliegender Anmeldung | 10 | 0 | 0 | 6 | 28 | 36 |
| Verbindung vom Beispiel 9 vorliegender Anmeldung | 10 | 0 | 1 | 48 | 76 | 78 |
| Verbindung vom Beispiel 11 vorliegender Anmeldung | 10 | 0 | 24 | 68 | 92 | 94 |

**0 078 975**

**Patentansprüche**

1. Oberflächenaktive Verbindungen, dadurch gekennzeichnet, daß sie hergestellt worden sind, indem man

a) ein Blockpolymerisat aus Propylenoxid und Ethylenoxid mit einem durchschnittlichen Molekulargewicht von 1650 bis 7000 und mit 10 bis 50 Gew.-% Ethylenoxid-Einheiten und 50 bis 90 Gew.-% Propylenoxid-Einheiten, Gewichtsprozent bezogen auf das Blockpolymerisat, und

b) ein oxalkyliertes Alkylphenol-Aldehydharz, das durch Umsetzen von Para- und/oder Ortho-Alkylphenolen mit 1 bis 18 C-Atomen in der Alkylgruppe mit einem aliphatischen Aldehyd mit 1 bis 4 C-Atomen im Molverhältnis von 1 : 0,5 bis 2 und Ethoxylierung und/oder Propoxylierung des Umsetzungsproduktes mit 1 bis 40 mol Epoxid pro phenolische Hydroxyl-Gruppe bereitet worden ist, mit

c) Formaldehyd umsetzt, wobei die Komponente a) in einer Menge von 1 bis 100 Gew.-Teilen, bezogen auf einen Gewichtsteil von der Komponente b), und der Formaldehyd in einer 0,5- bis 2fachen stöchiometrischen Menge, bezogen auf die Menge an Hydroxyl-Gruppen in a) und b), eingesetzt wird und die Umsetzung in Gegenwart von sauren Katalysatoren bei einer Temperatur von 50 bis 180° C durchgeführt wird.

2. Verbindungen nach Anspruch 1, dadurch gekennzeichnet, daß die Komponente a) ein Blockpolymerisat aus Propylenoxid und Ethylenoxid mit einem durchschnittlichen Molekulargewicht von 1900 bis 3800 und mit 10 bis 30 Gew.-% Ethylenoxid-Einheiten und 70 bis 90 Gew.-% Propylenoxid-Einheiten und die Komponente b) ein oxalkyliertes Alkylphenol-Aldehydharz ist, das durch Umsetzen von Para- und/oder Ortho-Alkylphenolen mit 4 bis 12 C-Atomen in der Alkylgruppe mit Formaldehyd im Molverhältnis von 1 : 0,8 bis 1,3 und Ethoxylierung und/oder Propoxylierung des Umsetzungsproduktes mit 2 bis 20 mol Epoxid pro phenolische OH-Gruppe bereitet worden ist, und bei der Umsetzung mit Formaldehyd die Komponente a) in einer Menge von 10 bis 40 Gew.-Teilen, bezogen auf einen Gewichtsteil von der Komponente b), und der Formaldehyd in einer 0,8- bis 1,5fachen, stöchiometrischen Menge, bezogen auf die Menge an Hydroxyl-Gruppen in a) und b), eingesetzt wird und die Umsetzungstemperatur 80 bis 160° C beträgt.

3. Verbindungen nach Anspruch 1, dadurch gekennzeichnet, daß die Komponente a) ein Blockpolymerisat aus Propylenoxid und Ethylenoxid ist, das hergestellt worden ist, indem an einem Polypropylenglykol mit einem durchschnittlichen Molekulargewicht von 1500 bis 3500 in Gegenwart von alkalischen Katalysatoren 10 bis 50 Gew.-% Ethylenoxid, bezogen auf das Blockpolymerisat, angelagert wird.

4. Verbindungen nach Anspruch 1, dadurch gekennzeichnet, daß die Komponente b) ein oxalkyliertes Alkylphenol-Aldehydharz ist, das hergestellt worden ist, indem das Alkylphenol und der Aldehyd in saurer Katalyse bei einer Temperatur von 90 bis 180° C umgesetzt wird und die Ethoxylierung und/oder Propoxylierung des Alkylphenol-Aldehydharzes in alkalischer Katalyse bei einer Temperatur von 100 bis 180° C durchgeführt wird.

5. Verfahren zur Herstellung von Verbindungen nach Anspruch 1, dadurch gekennzeichnet, daß man

a) ein Blockpolymerisat aus Propylenoxid und Ethylenoxid mit einem durchschnittlichen Molekulargewicht von 1650 bis 7000 und mit 10 bis 50 Gew.-% Ethylenoxid-Einheiten und 50 bis 90 Gew.-% Propylenoxid-Einheiten, Gewichtsprozent bezogen auf das Blockpolymerisat, und

b) ein oxalkyliertes Alkylphenol-Aldehydharz, das durch Umsetzen von Para- und/oder Ortho-Alkylphenolen mit 1 bis 18 C-Atomen in der Alkylgruppe mit einem aliphatischen Aldehyd mit 1 bis 4 C-Atomen im Molverhältnis von 1 : 0,5 bis 2 und Ethoxylierung und/oder Propoxylierung des Umsetzungsproduktes mit 1 bis 40 mol Epoxid pro phenolische Hydroxyl-Gruppe bereitet worden ist, mit

c) Formaldehyd umsetzt, wobei die Komponente a) in einer Menge von 1 bis 100 Gew.-Teilen, bezogen auf einen Gewichtsteil von der Komponente b), und der Formaldehyd in einer 0,5- bis 2fachen stöchiometrischen Menge, bezogen auf die Menge an Hydroxyl-Gruppen in a) und b), eingesetzt wird und die Umsetzung in Gegenwart von sauren Katalysatoren bei einer Temperatur von 50 bis 180° C durchgeführt wird.

6. Verfahren nach Anspruch 5, dadurch gekennzeichnet, daß man als Komponente a) ein Blockpolymerisat aus Propylenoxid und Ethylenoxid mit einem durchschnittlichen Molekulargewicht von 1900 bis 3800 und mit 10 bis 30 Gew.-% Ethylenoxid-Einheiten und 70 bis 90 Gew.-% Propylenoxid-Einheiten und als Komponente b) ein oxalkyliertes Alkylphenol-Aldehydharz einsetzt, das durch Umsetzen von Para- und/oder Ortho-Alkylphenolen mit 4 bis 12 C-Atomen in der Alkylgruppe mit Formaldehyd im Molverhältnis von 1 : 0,8 bis 1,3 und Ethoxylierung und/oder Propoxylierung des Umsetzungsproduktes mit 2 bis 20 mol Epoxid pro phenolische Hydroxyl-Gruppe bereitet worden ist, und bei der Umsetzung mit Formaldehyd die Komponente a) in einer Menge von 10 bis 40 Gew.-Teilen, bezogen auf einen Gewichtsteil von der Komponente b), und der Formaldehyd in einer 0,8- bis 1,5fachen, stöchiometri-

15

schen Menge, bezogen auf die Menge an Hydroxyl-Gruppen in a) und b), eingesetzt wird und die Umsetzung bei einer Temperatur von 80 bis 160° C durchgeführt wird.

7. Verfahren nach Anspruch 5, dadurch gekennzeichnet, daß als Komponente a) ein Blockpolymerisat aus Propylenoxid und Ethylenoxid eingesetzt wird, das hergestellt worden ist, indem an einem Polypropylenglykol mit einem durchschnittlichen Molekulargewicht von 1500 bis 3500 in Gegenwart von alkalischen Katalysatoren 10 bis 50 Gew.-% Ethylenoxid, bezogen auf das Blockpolymerisat, angelagert wird.

8. Verfahren nach Anspruch 5, dadurch gekennzeichnet, daß als Komponente b) ein oxalkyliertes Alkylphenol-Aldehydharz eingesetzt wird, das hergestellt worden ist, indem das Alkylphenol und der Aldehyd in saurer Katalyse bei einer Temperatur von 90 bis 180° C umgesetzt wird und die Ethoxylierung und/oder Propoxylierung des Alkylphenol-Aldehydharzes in alkalischer Katalyse bei einer Temperatur von 100 bis 180° C durchgeführt wird.

9. Verfahren zum Trennen von Erdölemulsionen vom Typ Wasser-in-Öl, dadurch gekennzeichnet, daß den Erdölemulsionen Verbindungen von einem der Ansprüche 1 bis 4 in wirksamer Menge zugesetzt werden.

10. Verfahren nach Anspruch 9, dadurch gekennzeichnet, daß die Verbindungen in einer Menge von 5 bis 100 ppm zugesetzt werden.

## Claims

1. A surface-active compound which has been prepared by reacting

a) a block polymer of propylene oxide and ethylene oxide, having an average molecular weight of 1650 to 7000 and containing 10 to 50% by weight of ethylene oxide units and 50 to 90% by weight of propylene oxide units, the percentages by weight being relative to the block polymer, and

b) an oxyalkyleneated alkylphenol/aldehyde resin which has been prepared by reaction of para-alkylphenols and/or ortho-alkylphenols having 1 to 18 carbon atoms in the alkyl group, with an aliphatic aldehyde having 1 to 4 carbon atoms, in the molar ratio 1 : 0.5 to 2, and oxyethyleneation and/or oxypropyleneation of the reaction product with 1 to 40 moles of epoxide per phenolic hydroxyl group, with

c) formaldehyde, component a) being used in an amount of 1 to 100 parts by weight, relative to one part by weight of component b), and the formaldehyde being used in a 0.5-fold to 2-fold stoichiometric amount, relative to the amount of hydroxyl groups in a) and b), and the relation being carried out in the presence of acid catalysts, at a temperature of 50 to 180° C.

2. A compound as claimed in claim 1, wherein component a) is a block polymer of propylene oxide and ethylene oxide having an average molecular weight of 1900 to 3800 and containing 10 to 30% by weight of ethylene oxide units and 70 to 90% by weight of propylene oxide units, and component b) is an oxyalkyleneated alkylphenol/aldehyde resin which has been prepared by reaction of para-alkylphenols and/or ortho-alkylphenols having 4 to 12 carbon atoms in the alkyl group, with formaldehyde in the molar ratio 1 : 0.8 to 1.3, and oxyethyleneation and/or oxypropyleneation of the reaction product with 2 to 20 moles of epoxide per phenolic OH group, and, in the reaction with formaldehyde, component a) is used in an amount of 10 to 40 parts by weight, relative to one part by weight of component b), and the formaldehyde is used in a 0.8-fold to 1.5-fold stoichiometric amount, relative to the amount of hydroxyl groups in a) and b), and the reaction temperature is 80 to 160° C.

3. A compound as claimed in claim 1, wherein component a) is a block polymer of propylene oxide and ethylene oxide which has been prepared by adding 10 to 50% by weight of ethylene oxide, relative to the block polymer, onto a polypropylene glycol having an average molecular weight of 1500 to 3500, in the presence of alkaline catalysts.

4. A compound as claimed in claim 1, wherein component b) is an oxyalkyleneated alkylphenol/aldehyde resin which has been prepared by reaction the alkylphenol and the aldehyde at a temperature of 90 to 180° C, under acid catalysis, and the oxyethyleneation and/or oxypropyleneation of the alkylphenol/aldehyde resin is carried out at a temperature of 100 to 180° C, under alkaline catalysis.

5. A process for the preparation of a compound as claimed in claim 1, which comprises reacting

a) a block polymer of propylene oxide and ethylene oxide, having an average molecular weight of 1650 to 7000 and containing 10 to 50% by weight of ethylene oxide units and 50 to 90% by weight of propylene oxide units, the percentages by weight being relative to the block polymer, and

b) an oxyalkyleneated alkylphenol/aldehyde resin which has been prepared by reaction of para-alkylphenols and/or ortho-alkylphenols having 1 to 18 carbon atoms in the alkyl group, with an aliphatic aldehyde having 1 to 4 carbon atoms, in the molar ratio 1 : 0.5 to 2, and oxyethyleneation and/or oxyproyleneation of the reaction product with 1 to 40 moles of epoxide per phenolic hydroxyl group, with

c) formaldehyde component a) being used in an amount of 1 to 100 parts by weight, relative to one part by weight of component b), and the formaldehyde being used in a 0.5-fold to 2-fold stoichiometric amount, relative to the amount of hydroxyl groups in a) and b), and the reaction being carried out in the presence of acid catalysts, at a temperature of 50 to 180° C.

6. The process as claimed in claim 5, wherein a block polymer of propylene oxide and ethylene oxide having an average molecular weight of 1900 to 3800 and containing 10 to 30% by weight of ethylene oxide units and 70 to 90% by weight of propylene oxide units is used as component a), and an oxyalkyleneated alkylphenol/aldehyde resin which has been prepared by reaction of para-alkylphenols and/or ortho-alkylphenols having 4 to 12 carbon atoms in the alkyl group, with formaldehyde in the molar ratio 1 : 0.8 to 1.3, and oxyalkyleneation and/or oxypropyleneation of the reaction product with 2 to 20 moles of epoxide per phenolic hydroxyl group, is used as component b), and, in the reaction with formaldehyde, component a) is used in an amount of 10 to 40 parts by weight, relative to one part by weight of component b), and the formaldehyde is used in a 0.8-fold to 1.5-fold stoichiometric amount, relative to the amount of hydroxyl groups a) and b), and the reaction is carried out at a temperature of 80 to 160° C.

7. The process as claimed in claim 5, wherein a block polymer of propylene oxide and ethylene oxide which has been prepared by adding 10 to 50% by weight of ethylene oxide, relative to the block polymer, onto a polypropylene glycol having an average molecular weight of 1500 to 3500, in the presence of alkaline catalysts, is used as component a).

8. The process as claimed in claim 5, wherein an oxyalkyleneated alkylphenol/aldehyde resin which has been prepared by reacting the alkylphenol and the aldehyde at a temperature of 90 to 180° C, under acid catalysis, is used as component b), and the oxyethyleneation and/or oxypropyleneation of the alkylphenol/aldehyde resin is carried out at a temperature of 100 to 180° C, under alkaline catalysis.

9. A process for the separation of petroleum emulsions of the water-in-oil type, which comprises adding an effective amount of a compound as claimed in any of claims 1 to 4 to the petroleum emulsions.

10. The process as claimed in claim 9, wherein the compound is added in an amount of 5 to 100 ppm.

## Revendications

1. Composés tensioactifs, caractérisés en ce qu'on les a préparés en faisant réagir

a) un polymère séquencé d'oxyde de propylène et d'oxyde d'éthylène, ayant une masse moléculaire moyenne de 1650 à 7000 et possédant 10 à 50% en poids de motifs oxyde d'éthylène et 50 à 90% en poids de motifs oxyde de propylène, les pourcentages en poids se rapportant au polymère séquencé, et

b) une résine d'alkylphénol-aldéhyde alcoxylée, qui a été préparée par réaction de para- et/ou ortho-alkylphénols ayant 1 à 18 atomes de carbone dans le groupe alkyle, avec un aldéhyde aliphatique ayant 1 à 4 atomes de carbone, selon un rapport molaire 1 : 0,5 à 2, et éthoxylation et/ou propoxylation du produit de réaction avec 1 à 40 moles d'époxyde par groupe hydroxyle phénolique,

c) sur du formaldéhyde, le constituant a) étant utilisé en une quantité de 1 à 100 parties en poids pour 1 partie en poids du constituant b), et le formaldéhyde étant utilisé en une quantité 0,5 à 2 fois stoechiométrique par rapport à la quantité de groupes hydroxyle de a) et b), la réaction se déroulant à une température de 50 à 180° C en présence de catalyseurs acides.

2. Composés selon la revendication 1, caractérisé en ce que le constituant a) est un polymère séquencé d'oxyde de propylène et d'oxyde d'éthylène ayant une masse moléculaire moyenne de 1900 à 3800 et possédant 10 à 30% en poids de motifs oxyde d'éthylène et 70 à 90% en poids de motifs oxyde de propylène, et que le constituant b) est une résine d'alkylphénol-aldéhyde alcoxylée, qui a été préparée par réaction de para- et/ou ortho-alkylphénols ayant 4 à 12 atomes de carbone dans le groupe alkyle sur du formaldéhyde selon un rapport molaire de 1 : 0,8 à 1,3, et éthoxylation et/ou propoxylation du produit de réaction par 2 à 20 moles d'époxyde par groupe OH phénolique, et que, lors de la réaction sur le formaldéhyde, on utilise le constituant a) en une quantité de 10 à 40 parties en poids par partie en poids du constituant b) et le formaldéhyde en une quantité 0,8 à 1,5 fois stoechiométrique par rapport à la quantité de groupes hydroxyle de a) et b), la température de réaction étant de 80 à 160° C.

3. Composés selon la revendication 1, caractérisés en ce que le constituant a) est un polymère séquencé d'oxyde de propylène et d'oxyde d'éthylène, qui a été préparé par fixation, sur un polypropylèneglycol ayant une masse moléculaire moyenne de 1500 à 3500, en présence de catalyseurs alcalins, de 10 à 50% en poids d'oxyde d'éthylène, par rapport au polymère séquencé.

4. Composés selon la revendication 1, caractérisés en ce que le constituant b) est une résine d'alkylphénol-aldéhyde alcoxylée qui a été préparée par réaction de l'alkylphénol et de l'aldéhyde, par catalyse acide à une température de 90 à 180°C, l'éthoxylation et/ou la propoxylation de la résine d'alkylphénol-aldéhyde étant effectuée par catalyse alcaline à une température de 100 à 180°C.

5. Procédé pour la préparation de composés selon la revendication 1, caractérisé en ce qu'on fait réagir

a) un polymère séquencé d'oxyde de propylène et d'oxyde d'éthylène ayant une masse moléculaire moyenne de 1650 à 7000 et possédant 10 à 50% en poids de motifs oxyde d'éthylène et 50 à 90% en poids de motifs oxyde de propylène, les pourcentages en poids se rapportant au polymère séquencé, et

b) une résine d'alkylphénol-aldéhyde alcoxylée, qui a été préparée par réaction de para- et/ou ortho-alkylphénols ayant 1 à 18 atomes de carbone dans le groupe alkyle avec un aldéhyde aliphatique ayant 1 à 4 atomes de carbone selon un rapport molaire de 1 : 0,5 à 2, et éthoxylation et/ou propoxylation du produit de réaction par 1 à 40 moles d'époxyde par groupe hydroxyle phénolique,

c) sur du formaldéhyde, le constituant a) étant utilisé en une quantité de 1 à 100 parties en poids pour 1 partie en poids du constituant b), et le formaldéhyde en une quantité 0,5 à 2 fois stoechiométrique, par rapport à la quantité de groupes hydroxyle de a) et b), la réaction se déroulant en présence de catalyseurs acides à une température de 50 à 180°C.

6. Procédé selon la revendication 5, caractérisé en ce qu'on utilise en tant que constituant a) un polymère séquencé d'oxyde de propylène et d'oxyde d'éthylène ayant une masse moléculaire moyenne de 1900 à 3800 et possédant 10 à 30% en poids de motifs oxyde d'éthylène et 70 à 90% en poids de motifs oxyde de propylène et, en tant que constituant b), une résine d'alkylphénol-aldéhyde alcoxylée, qui a été préparé par réaction de para- et/ou ortho-alkylphénols ayant 4 à 12 atomes de carbone dans le groupe alkyle sur du formaldéhyde selon un rapport molaire de 1 : 0,8 à 1,3 et éthoxylation et/ou propoxylation du produit de réaction par 2 à 20 moles d'poxyde par groupe hydroxyle phénolique, tandis que l'on utilise lors de la réaction sur le formaldéhyde le constituant a) en une quantité de 10 à 40 parties en poids par partie en poids du constituant b) et le formaldéhyde en une quantité 0,8 à 1,5 fois stoechiométrique par rapport à la quantité des groupes hydroxyle de a) et b), la réaction se déroulant à une température de 80 à 160°C.

7. Procédé selon la revendication 5, caractérisé en ce qu'on utilise en tant que constituant a) un polymère séquencé d'oxyde de propylène et d'oxyde d'éthylène qui a été préparé par fixation, sur un polypropylèneglycol ayant une masse moléculaire moyenne de 1500 à 3500, en présence de catalyseurs alcalins, de 10 à 50% en poids d'oxyde d'éthylène, par rapport au polymère séquencé.

8. Procédé selon la revendication 5, caractérisé en ce qu'on utilise en tant que constituant b) une résine d'alkylphénol-aldéhyde alcoxylée qui a été préparée en faisant réagir l'alkylphénol et l'aldéhyde, en catalyse acide, à une température de 90 à 180°C, l'éthoxylation et/ou la propoxylation de la résine d'alkylphénol-aldéhyde se déroulant en catalyse alcaline à une température de 100 à 180°C.

9. Procédé pour la séparation d'émulsions pétrolières du type eau dans l'huile, caractérisé en ce qu'on ajoute aux émulsions pétrolières des composés selon l'une des revendications 1 à 4, en une quantité efficace.

10. Procédé selon la revendication 9, caractérisé en ce que les composés sont ajoutés en une quantité de 5 à 100 ppm.